# EUROPÄISCHE PATENTSCHRIFT

(11) **EP 1 802 876 B1**
(45) Veröffentlichungstag und Bekanntmachung des Hinweises auf die Patenterteilung: **08.10.2008**
(21) Anmeldenummer: 05756885.9
(22) Anmeldetag: 17.06.2005
(51) Int. Cl.: F16D 1/072

(54) **FORMSCHLÜSSIGE VERBINDUNG ZWISCHEN EINER WELLE UND EINEM AN- ODER ABTRIEBSELEMENT EINER STELLVORRICHTUNG EINES KRAFTFAHRZEUGS UND VERFAHREN ZU IHRER HERSTELLUNG**
POSITIVE CONNECTION BETWEEN A SHAFT AND A DRIVEN OR DRIVING ELEMENT OF AN ACTUATOR ON A MOTOR VEHICLE AND METHOD FOR PRODUCTION THEREOF
LIAISON DE FORME ENTRE UN ARBRE ET UN ELEMENT MENANT OU MENE D'UN DISPOSITIF DE REGLAGE D'UN VEHICULE AUTOMOBILE ET PROCEDE DE PRODUCTION ASSOCIE

(30) Priorität: 25.09.2004 DE 102004046625
(43) Veröffentlichungstag der Anmeldung: 04.07.2007
(73) Patentinhaber: ROBERT BOSCH GMBH, 70442 Stuttgart (DE)
(72) Erfinder: GRIMM, Gerold, 71229 Leonberg (DE); LORENZ, Christian, 73434 Aalen-Unterrombach (DE); TORNO, Robert, 74321 Bietigheim-Bissingen (DE)
(86) Internationale Anmeldenummer: PCT/EP2005/052840
(87) Internationale Veröffentlichungsnummer: WO 2006/032545

(56) Entgegenhaltungen:
- EP-A- 0 340 128
- EP-A- 0 647 789
- DE-A1- 3 521 206
- DE-A1- 10 244 788
- FR-A- 2 841 522

## Beschreibung

### Stand der Technik

Die Erfindung betrifft ein eine formschlüssige Verbindung zwischen einer zumindest im Verbindungsbereich aus einem thermisch plastisch verformbaren Kunststoffmaterial bestehenden hohlen Welle und einem An- oder Abtriebselement wie beispielsweise einem Zahnrad oder einem Betätigungshebel einer Stellvorrichtung eines Kraftfahrzeugs, wobei die Welle und das An- oder Abtriebselement durch eine Profilierung gegeneinander verdrehgesichert sind und das An- oder Abtriebselement gegen einen Absatz der Welle axial anschlägt, und ein Verfahren zu ihrer Herstellung gemäß den Oberbegriffen von Anspruch 1 und Anspruch 7.

Unter einem An- oder Abtriebselement soll im folgenden ein Element verstanden werden, das eine Dreh- oder Linearbewegung aufnimmt und auf die Welle überträgt oder eine in die Welle eingeleitete Drehbewegung auf angrenzende Baugruppen überträgt, wie beispielsweise ein Zahnrad oder ein Hebel. Unter Stellvorrichtung eines Kraftfahrzeugs soll jegliche Art von Stellvorrichtung, mit welcher ein Bauteil oder eine Baugruppe des Kraftfahrzeugs angetrieben oder verstellt wird, beispielsweise ein Drosselklappensteller, ein Scheibenwischerantrieb, eine E-GAS-Stelleinrichtung oder ein Steller eines Abgasrückführventils, verstanden werden.

Aus dem Stand der Technik sind Verbindungen in Stellvorrichtungen von Kraftfahrzeugen bekannt, bei welchen eine solche Welle und ein solches An- oder Abtriebselement miteinander verschraubt sind, beispielsweise dadurch, dass das über das An- oder Abtriebselement überstehende Ende der Welle mit einem Außengewinde versehen ist, auf welches eine Mutter aufgeschraubt wird, um das An- oder Abtriebselement auf der Welle zu kontern. Die Mutter bildet allerdings ein zusätzliches Bauteil, bei welchem zudem die Gefahr besteht, dass es sich durch die bei Kraftfahrzeugen herrschende Rüttelbelastung mit der Zeit löst. Bei lösbaren kraftschlüssigen Verbindungen zwischen Welle und An- oder Abtriebselement kann außerdem durch Materialkriechen mit der Zeit ein Lösen der Verbindung auftreten. Weiterhin können die beiden genannten Bauteile auch durch Klebung miteinander verbunden werden, was allerdings einen zusätzlichen Stoff und eine Trocknungszeit bedingt. Schweißverbindungen haben den Nachteil, dass sie auf bestimmte, miteinander verschweißbare Stoffpaarungen beschränkt sind. Schließlich bedingen Schnappverbindungen einen größeren Formgebungsaufwand. Weitere Verbindungen sind zum Beispiel aus DE 3521206 bekannt.

### Vorteile der Erfindung

Das erfindungsgemäße Verfahren schlägt vor, ein einen axialen Gegenanschlag für das An- oder Abtriebselement bildender Wulst zu erzeugen, indem das über das An- oder Abtriebselements überstehende freie Ende der Welle erwärmt und mittels eines Stempels gepresst wird. Ergebnis ist folglich ein das An- oder Abtriebselement radial zumindest teilweise übergreifender, durch plastische Heißverformung des freien Endes der Welle hervorgegangener Wulst.

Eine solche, durch plastische Heißverformung erzeugte Verbindung eignet sich hervorragend zum Einsatz bei Fahrzeugen, da sie als plastisch-formschlüssige Verbindung auf Lebensdauer gesichert unempfindlich gegen Rüttelbeanspruchung ist. Weiterhin kann das Material des An- oder Abtriebselements je nach Erfordemis frei gewählt werden. Solange die Temperatur unterhalb der Erweichungstemperatur des Kunststoffes der Welle bleibt, was unter üblichen Einsatzbedingungen der Fall ist, ist die Verbindung temperaturunempfindlich. Schließlich ist sie resistent gegenüber aggressiven Medien.

Durch die in den Unteransprüchen aufgeführten Maßnahmen sind vorteilhafte Weiterbildungen und Verbesserungen der im unabhängigen Patentanspruch angegebenen Erfindung möglich.

Besonders bevorzugt erfolgt die Erwärmung des Wellenendes durch Anwendung von Heißgas, von Wärmestrahlung oder durch Reibung. Dabei kann die Wärme auf den Stempel und/oder direkt auf das freie Ende der Welle appliziert werden. Im ersten Fall wird daher das freie, zu verformende Ende der Welle durch den direkten Kontakt des erwärmten Stempels erhitzt. Alternativ wird mit kaltem Stempel gepresst, nachdem zuvor das freie Ende der Welle erhitzt wurde. Schließlich können auch der Stempel und das freie Ende der Welle erhitzt und dann der Pressvorgang durchgeführt werden.

Der Pressvorgang erfolgt beispielsweise unter linearem Vorschub des Stempels in Richtung der Wellenachse, einer Kombination aus linearem Vorschub des Stempels in Richtung der Wellenachse und überlagerter Drehbewegung um die Wellenachse oder einer Kombination aus linearem Vorschub des Stempels in Richtung der Wellenachse und überlagerter Taumelbewegung um die Wellenachse.

Gemäß einer Weiterbildung weist das An- oder Abtriebselement eine nach radial innen weisende Stufe zur Aufnahme des Wulstes auf. Dann wird das erwärmte, viskose Kunststoffmaterial durch den Druck des Stempels in die Stufe gedrängt, wobei diese die Größe und Erstreckung des Wustes festlegt, wodurch eine reproduzierbare Festigkeit der Verbindung gegeben ist.

Das Verfahren zur Herstellung der Verbindung und der Aufbau der Verbindung wird anhand der folgenden Beschreibung eines Ausführungsbeispiels klar.

### Zeichnung

In der Zeichnung zeigt
- Fig.1: eine Querschnittsdarstellung einer Verbindung zwischen einer Welle und einem Zahnrad vor ihrer Fertigstellung;
- Fig.2: eine Querschnittsdarstellung der Verbindung von Fig.1 nach ihrer Fertigstellung

### Beschreibung eines Ausführungsbeispiels

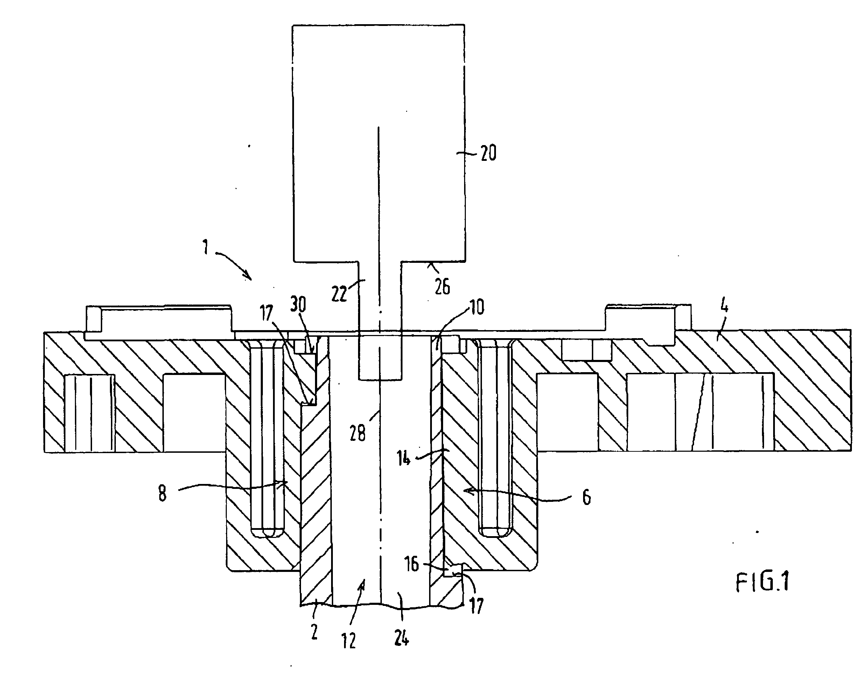

In der Fig. 1 ist eine Verbindung 1 zwischen einer hohlen Welle 2 und einem An- oder Abtriebselement, hier einem Zahnrad 4 vor ihrer Fertigstellung dargestellt. Die Welle 2 und das Zahnrad 4 sind Teile einer Stellvorrichtung eines Kraftfahrzeugs, wie beispielsweise eines Drosselklappenstellers der Brennkraftmaschine, eines Scheibenwischerantrieb, einer EGAS-Stelleinrichtung, welche mit einem Pedalwertgeber die Stellung des Gaspedals elektronisch erfasst und durch das Motorsteuergerät eine entsprechende Stellung der Drosselklappe veranlasst, oder eines Steller eines Abgasrückführventils. Anstatt eine Zahnrades 4 kann durch die Verbindung 1 jegliche andere Art von An- oder Abtriebselement auf der Welle 2 befestigt sein, beispielsweise auch ein Hebel oder ein Nocken.

Die Welle 2 besteht vorzugsweise vollständig aus einem thermoplastischen Kunststoff, der unter Wärmeeinwirkung plastisch verformbar ist. Anstatt vollständig aus Kunststoff kann die Welle 2 auch lediglich in einem Verbindungsbereich 6 mit dem Zahnrad 4 aus einem thermoplastischen Kunststoffmaterial bestehen.

Die Verbindung 1 zwischen der Welle 2 und dem Zahnrad 4 ist dreh- und axialfest, wobei die Welle 2 und das Zahnrad 4 durch eine radiale Profilierung 8 gegeneinander verdrehgesichert sind. Dies kann beispielsweise dadurch realisiert sein, dass im Verbindungsbereich 6 das freie Ende 10 der Welle 2 an seiner radial äußeren Umfangsfläche und das Zahnrad 4 an seiner radial inneren Umfangsfläche einer zentralen Durchgangsbohrung 12, durch welche das freie Ende 10 der Welle 2 ragt, die ineinander greifenden Profilierungen 8 aufweisen. Diese ineinander greifenden Profilierungen 8 bilden gemäß der bevorzugten Ausführungsform zugleich einen axialen Anschlag für das auf die Welle 2 aufgeschobene Zahnrad 4, d.h., dass die vom freien Ende 10 der Welle 2 weg weisenden Stirnflächen von ineinander greifenden Vorsprüngen 14 und Ausnehmungen 16, welche eigentlich zur Herstellung der Drehverbindung vorgesehen sind, zugleich auch wenigstens einen als Axialanschlag der Verbindung 1 wirkenden Absatz 17 ausbilden.

Der axiale Gegenanschlag wird durch einen an der Stirnfläche des freien Endes 10 der Welle 2 vorhandenen Wulst 18 gebildet, welcher durch eine plastische Heißverformung des Kunststoffmaterials der Welle 2 hervorgegangen ist. Zur Herstellung der Verbindung 1 wird also zunächst das Zahnrad 4 auf die Welle 2 gesetzt bis es gegen die Absätze 17 anschlägt und das freie Ende 10 der Welle 2 aus der Durchgangsbohrung 12 ein Stück herausragt. Sodann wird das freie Ende 10 der Welle 2 erwärmt und zur Ausbildung des Wulstes 18 gepresst. Der Druck wird durch einen zylindrischen Stempel 20 erzeugt, welcher in seiner Ausgangslage koaxial zur Welle 2 und zum Zahnrad 4 angeordnet, aber axial noch beabstandet liegt. Dieser Stempel 20 hat einen dem freien Ende 10 der Welle 2 zugewandten Zapfen 22, welcher in die Öffnung 24 der hohlen Welle 2 eintauchen kann, wenn der Stempel 20 mit seiner stirnseitigen Ringfläche 26 axial gegen die Stirnfläche des freien Endes 10 der Welle 2 gepresst wird.

Die Erwärmung das freien Endes 10 der Welle 2 auf eine Temperatur, bei welcher eine plastische Heißverformung erreichbar ist, kann auf beliebige Art, vorzugsweise aber durch Anwendung von Heißgas oder von Wärmestrahlung oder auch durch Reibung erfolgen.

Bevorzugt wird die Wärme auf das freie Ende 10 der Welle 2 appliziert und danach der kalte Stempel 20 gegen das erwärmte freie Ende 10 der Welle 2 gepresst. Alternativ kann die Wärme zunächst auf den Stempel 20 appliziert und der erhitzte Stempel 20 gegen das noch kalte, freie Ende 10 der Welle 2 gepresst werden. Schließlich können auch der Stempel 20 und das freie Ende 10 der Welle 2 erhitzt und dann der Pressvorgang durchgeführt werden.

Der Pressvorgang kann dabei mit linearem Vorschub des Stempels 20 in Richtung der Wellenachse 28, einer Kombination aus linearem Vorschub des Stempels 20 in Richtung der Wellenachse und überlagerter Drehbewegung um die Wellenachse 28 oder einer Kombination aus linearem Vorschub des Stempels 20 in Richtung der Wellenachse 28 und überlagerter Taumelbewegung um die Wellenachse 28 erfolgen.

Vorzugsweise weisen der Wärmeausdehnungskoeffizient des Materials der Welle 2 und der Wärmeausdehnungskoeffizient des Kunststoffmaterials des Zahnrads 4 dieselbe Größenordnung auf, damit es zu keinen größeren Materialspannungen kommt

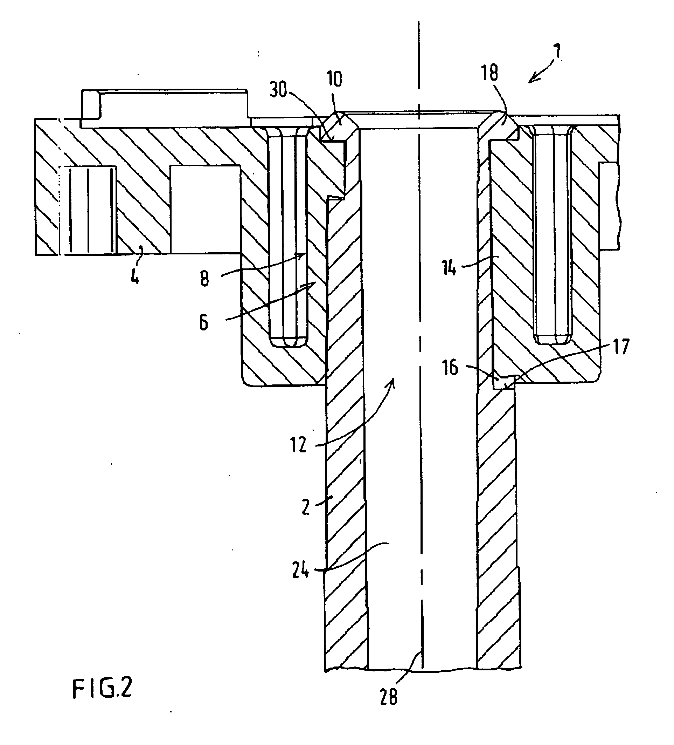

Das Zahnrad 4 weist im Bereich des freien Endes 10 der Welle 2 eine nach radial innen weisende Stufe 30 zur Aufnahme des Wulstes 18 auf. Dann wird das erwärmte, viskose Kunststoffmaterial durch den Druck des Stempels 20 in die Stufe 30 gedrängt, wobei diese die Größe und Erstreckung des Wustes 18 festlegt. Hierdurch wird eine reproduzierbare Festigkeit der Verbindung 1 gewährleistet. Schließlich übergreift der Wulst 18 den Gegenanschlag bildend die Stufe 30 des Zahnrads 4 radial, wodurch das Zahnrad 4 zwischen dem Wulst 18 und den durch die Profilierungen 8 gebildeten weiteren Axialanschlägen 17 auch in axialer Richtung fixiert ist, wie insbesondere aus Fig.2 hervorgeht.

## Patentansprüche

1. Verfahren zur Herstellung einer formschlüssigen Verbindung (1) zwischen einer zumindest im Verbindungsbereich (6) aus einem thermisch plastisch verformbaren Kunststoffmaterial bestehenden hohlen Welle (2) und einem An- oder Abtriebselement wie beispielsweise einem Zahnrad (4) einer Stellvorrichtung eines Kraftfahrzeugs, wobei die Welle (2) und das An- oder Abtriebselement (4) durch eine Profilierung (8) gegeneinander verdrehgesichert sind und das An- oder Abtriebselement (4) gegen einen Absatz (17) der Welle (2) axial anschlägt, **gekennzeichnet durch** die Erzeugung eines einen axialen Gegenanschlag für das An- oder Abtriebselement (4) bildenden Wulstes (18), indem das über das An- oder Abtriebselement (4) überstehende freie Ende (10) der Welle (2) erwärmt und unter Anwendung eines von einem Stempel (20) ausgeübten Drucks gepresst wird.

2. Verfahren nach Anspruch 1, **dadurch gekennzeichnet, dass** die Erwärmung durch Anwendung von Heißgas oder von Wärmestrahlung oder durch Reibung erfolgt.

3. Verfahren nach Anspruch 1 oder 2, **dadurch gekennzeichnet, dass** die Wärme auf den Stempel (20) appliziert und der erhitzte Stempel (20) gegen das freie Ende (10) der Welle (2) gepresst wird.

4. Verfahren nach Anspruch 1 oder 2, **dadurch gekennzeichnet, dass** die Wärme auf das freie Ende (10) der Welle (2) appliziert und danach der Stempel (20) gegen das freie Ende (10) der Welle (2) gepresst wird.

5. Verfahren nach wenigstens einem der vorhergehenden Ansprüche, **dadurch gekennzeichnet, dass** der Pressvorgang durch einen linearen Vorschub des Stempels (20) in Richtung der Wellenachse (28), eine Kombination aus linearem Vorschub des Stempels (20) in Richtung der Wellenachse (28) und überlagerter Drehbewegung um die Wellenachse (28) oder durch eine Kombination aus linearem Vorschub des Stempels (20) in Richtung der Wellenachse (28) und überlagerter Taumelbewegung um die Wellenachse (28) erfolgt.

6. Verfahren nach wenigstens einem der vorhergehenden Ansprüche, **dadurch gekennzeichnet, dass** der Wärmeausdehnungskoeffizient des Materials der Welle (2) und der Wärmeausdehnungskoeffizient des Materials des An- oder Abtriebselements (4) dieselbe Größenordnung aufweisen.

7. Formschlüssige Verbindung (1) zwischen einer zumindest im Verbi n-dungsbereich (6) aus einem thermisch plastisch verformbaren Kunststoffmaterial bestehenden hohlen Welle (2) und einem An- oder Abtriebselement wie beispielsweise einem Zahnrad (4) einer Stellvorrichtung eines Kraftfahrzeugs, wobei die Welle (2) und das An- oder Abtriebselement (4) durch eine Profilierung (8) gegeneinander verdrehgesichert sind und das An- oder Abtriebselement (4) gegen einen Absatz (17) der Welle (2) axial anschlägt, **dadurch gekennzeichnet, dass** zur Ausbildung eines axialen Gegenanschlags für das An- oder Abtriebselement (4) am freien Ende (10) der Welle (2) ein das An- oder Abtriebselement (4) radial zumindest teilweise übergreifender, durch plastische Heißverformung des freien Endes (10) der Welle (2) hervorgegangener Wulst (18) vorgesehen ist.

8. Verbindung nach Anspruch 7, **dadurch gekennzeichnet, dass** das An- oder Abtriebselement (4) eine nach radial innen weisende Stufe (30) zur Aufnahme des Wulstes (18) aufweist.

## Claims

1. Method of producing a positive-locking connection (1) between a hollow shaft (2), made of a thermally plastically deformable plastic material at least in the connecting region (6), and a driving or output element, such as, for example, a gear (4), of an actuating device of a motor vehicle, wherein the shaft (2) and the driving or output element (4) are locked against rotation relative to one another by profiling (8), and the driving or output element (4) axially strikes a shoulder (17) of the shaft (2), **characterized by** the production of a bead (18), forming an axial counter-stop for the driving or output element (4), by the free end (10), which projects above the driving or output element (4), of the shaft (2) being heated and pressed by the application of a pressure exerted by a plunger (20).

2. Method according to Claim 1, **characterized in that** the heating is effected by the application of hot gas or of heat radiation or by friction.

3. Method according to Claim 1 or 2, **characterized in that** the heat is applied to the plunger (20) and the heated plunger (20) is pressed against the free end (10) of the shaft (2).

4. Method according to Claim 1 or 2, **characterized in that** the heat is applied to the free end (10) of the shaft (2) and after that the plunger (20) is pressed against the free end (10) of the shaft (2).

5. Method according to at least one of the preceding claims, **characterized in that** the pressing operation is effected by a linear feed of the plunger (20) in the direction of the shaft axis (28), by a combination of a linear feed of the plunger (20) in the direction of the shaft axis (28) and a superimposed rotary movement about the shaft axis (28) or by a combination of a linear feed of the plunger (20) in the direction of the shaft axis (28) and a superimposed tumbling movement about the shaft axis (28).

6. Method according to one of the preceding claims, **characterized in that** the coefficient of thermal expansion of the material of the shaft (2) and the coefficient of thermal expansion of the material of the driving or output element (4) have the same order of magnitude.

7. Positive-locking connection (1) between a hollow shaft (2), made of a thermally plastically deformable plastic material at least in the connecting region (6), and a driving or output element, such as, for example, a gear (4), of an actuating device of a motor vehicle, wherein the shaft (2) and the driving or output element (4) are locked against rotation relative to one another by profiling (8), and the driving or output element (4) axially strikes a shoulder (17) of the shaft (2), **characterized in that** a bead (18) which at least partly radially overlaps the driving or output element (4) and is brought about by hot plastic deformation of the free end (10) of the shaft (2) is provided in order to form an axial counter-stop for the driving or output element (4) at the free end (10) of the shaft (2).

8. Connection according to Claim 7, **characterized in that** the driving or output element (4) has a step (30) pointing radially inwards for accommodating the bead (18).

## Revendications

1. Procédé de fabrication d'une liaison par la forme (1) entre au moins une zone de liaison (6) d'un arbre creux (2) en une matière synthétique déformable, thermoplastique, et d'un élément d'entraînement ou d'un élément entraîné tel que par exemple un pignon (4) d'un actionneur de véhicule automobile selon lequel
on bloque en rotation l'arbre (2) et l'élément d'entraînement ou élément entraîné (4) par un profilage (8) et l'élément d'entraînement ou élément entraîné (4) bute axialement contre un épaulement (17) de l'arbre (2),
**caractérisé en ce qu'**
on réalise un bourrelet (18) constituant une contrebutée axiale de l'élément d'entraînement ou élément entraîné (4) **en ce que** l'on chauffe l'extrémité libre (10) de l'arbre (2) qui dépasse de l'élément d'entraînement ou élément entrainé (4) et on exerce une pression à l'aide d'un poinçon (20).

2. Procédé selon la revendication 1,
**caractérisé en ce que**
le chauffage se fait avec un gaz chaud ou par radiation ou par friction.

3. Procédé selon la revendication 1 ou 2,
**caractérisé en ce qu'**
on applique la chaleur au poinçon (20) et on presse le poinçon chauffé (20) contre l'extrémité libre (10) de l'arbre (2).

4. Procédé selon la revendication 1 ou 2,
**caractérisé en ce qu'**
on applique la chaleur à l'extrémité libre (10) de l'arbre (2) et ensuite on presse le poinçon (20) contre l'extrémité libre (10) de l'arbre (2).

5. Procédé selon au moins l'une des revendications précédentes,
**caractérisé en ce que**
on effectue l'opération de compression par une avancée linéaire du poinçon (20) dans la direction de l'axe (28) de l'arbre, par la combinaison d'une avancée linéaire du poinçon (20) dans la direction de l'axe (28) de l'arbre et d'un mouvement de rotation autour de l'axe (28) de l'arbre ou par la combinaison d'une avancée linéaire du poinçon (20) dans la direction de l'axe (28) de l'arbre et d'un mouvement de nutation autour de l'axe (28) de l'arbre.

6. Procédé selon au moins l'une des revendications précédentes,
**caractérisé en ce que**
le coefficient de dilatation thermique de la matière de l'arbre (2) et le coefficient de dilatation thermique de la matière de l'élément d'entraînement ou de l'élément entraîné (4) sont du même ordre de grandeur.

7. Liaison par la forme (1) entre au moins une zone de liaison (6) d'un arbre creux (2) composé de matière synthétique déformable thermoplastique et d'un élément d'entraînement ou élément entraîné comme par exemple un pignon denté (4) d'un actionneur de véhicule automobile,
l'arbre (2) et l'élément d'entraînement ou élément entraîné (4) sont bloqués en rotation l'un par rapport à l'autre par un profilage (8) et l'élément d'entraînement ou élément entraîné (4) bute axialement contre un épaulement (17) de l'arbre (2),
**caractérisée en ce que**
pour réaliser une contrebutée axiale de l'élément d'entraînement ou élément entraîné (4), à l'extrémité libre (10) de l'arbre (2), on a un bourrelet (18) venant en saillie par déformation plastique à chaud de l'extrémité libre (10) de l'arbre (2) et qui chevauche au moins partiellement, radialement, l'élément d'entraînement ou élément entraîné (4).

8. Liaison selon la revendication 7,
**caractérisée en ce que**
l'élément d'entraînement ou élément entraîné (4) comporte un épaulement (30) dirigé radialement vers l'intérieur pour recevoir le bourrelet (18).
